# EUROPÄISCHE PATENTSCHRIFT

(11) **EP 4 064 081 B1**
(45) Veröffentlichungstag und Bekanntmachung des Hinweises auf die Patenterteilung: **24.05.2023**
(21) Anmeldenummer: 21164278.0
(22) Anmeldetag: 23.03.2021
(51) Int. Cl.: G06F 21/32, G10L 17/06

(54) **VERFAHREN UND SYSTEM ZUM IDENTIFIZIEREN UND AUTHENTIFIZIEREN EINES NUTZERS IN EINEM IP NETZ**
METHOD AND SYSTEM FOR IDENTIFYING AND AUTHENTICATING A USER IN AN IP NETWORK
PROCÉDÉ ET SYSTÈME D'IDENTIFICATION ET D'AUTHENTIFICATION D'UN UTILISATEUR DANS UN RÉSEAU IP

(43) Veröffentlichungstag der Anmeldung: 28.09.2022
(73) Patentinhaber: Deutsche Telekom AG, 53113 Bonn (DE)
(72) Erfinder: MINOW, Jascha, 64625 Bensheim (DE); MÜLLER, Ingo, 64297 Darmstadt (DE)
(74) Vertreter: RDL Patentanwälte PartG mbB

(56) Entgegenhaltungen:
- US-A1- 2016 300 050
- US-A1- 2019 214 022
- US-B1- 6 182 037
- US-B2- 10 469 489

## Beschreibung

### Technisches Gebiet

Die Erfindung betrifft ein Verfahren zum Identifizieren und Authentifizieren eines Nutzers in einem IP Netz, um dem Nutzer Zugang zu einem gesicherten Bereich in dem IP Netz, insbesondere zu vertraulichen Daten und/oder Diensten, bspw. auch zu in einer Cloud hinterlegten vertraulichen Daten und/oder zu vertraulichen Cloud-Diensten zu gewähren. Ferner betrifft die Erfindung ein System zum Identifizieren und Authentifizieren eines Nutzers in einem IP Netz und ein Computerprogrammprodukt zum Identifizieren und Authentifizieren eines Nutzers in einem IP Netz.

### Hintergrund der Erfindung

Eine Authentifizierung eines Menschen anhand seiner Stimme, auch bekannt als "Voice Verification and Voice Identification" ist ein biometrisches Authentifizierungsverfahren. Die Stimme wird hier als Erkennungsmerkmal genutzt. Hiermit soll sichergestellt bzw. verifiziert werden, dass es sich entweder um die Person handelt, für die sie sich anhand einer Identifizierungsangabe selbst ausgibt oder dass es sich um die Person handelt, die vermeintlich anhand eines anderen Merkmals erkannt wurde.

US 6,182,037 B1 beschreibt Übereinstimmungstechniken zur Sprechererkennung, wobei Sprecher in Gruppen zugeordnet werden, wenn eine potentielle Verwechslung zwischen einem angemeldeten Sprecher und einem zuvor angemeldeten Sprecher festgestellt wird. Somit werden detaillierte Übereinstimmungstechniken nur bei einem potentiellen Beginn der Sättigung einer schnellen Übereinstimmungstechnik aufgerufen, während die detaillierte Übereinstimmungstechnik durch die Beschränkung von Vergleichen auf die jeweilige Gruppe und die Entwicklung von sprecherabhängigen Modellen erleichtert wird, die hauptsächlich dazu dienen, zwischen Mitgliedern einer Gruppe zu unterscheiden anstatt jeden Sprecher vollständiger zu charakterisieren.

Biometrische Verfahren erfreuen sich zunehmender Beliebtheit, da man als Nutzer biometrische Daten bzw. Merkmale immer mit sich führt und diese damit jederzeit verfügbar sind. Ferner kann man diese im Gegensatz zu Passwörtern oder PiNs nicht vergessen oder muss diese nicht regelmäßig ändern.

Derzeit ist es bei vielen Anwendungen aus verschiedenen Gründen in der Praxis so, dass in Prozessen zur Identifizierung und Authentifizierung eines Nutzers zwei Merkmale genutzt werden.

Bei sogenannten Web-Anwendungen sind dies typischerweise ein "Nutzername" (oder alternativ dazu eine Email-Adresse des Nutzers) und zusätzlich ein Passwort. Bei Telefonanwendungen ist dies in der Regel die übertragene "Calier ID" bzw. die Telefonnummer des Anrufenden und ebenfalls zusätzlich ein Passwort.

Werden biometrische Verfahren angewendet, bei denen die Stimme des jeweiligen Nutzers, ein Scan des Gesichts des jeweiligen Nutzers oder ein Fingerabdruck des jeweiligen Nutzers verwendet werden, so geschieht dies heute immer nur in Kombination mit einem anderen, nicht biometrischen Merkmal des jeweiligen Nutzers, wie dem voranstehend genannten Nutzernamen, der voranstehend genannten Email-Adresse oder der voranstehend genannten Telefonnummer des jeweiligen Nutzers.

Dabei wird in einem ersten Schritt identifiziert, wer der Nutzer vorgibt zu sein bzw. es wird versucht, automatisch zu erkennen, um welchen Nutzer es sich handelt. Hierzu werden in der Regel nicht biometrische Daten/Merkmale, wie bspw. die voranstehend genannten Merkmale Nutzername, E-Mail-Adresse oder Telefonnummer herangezogen.

In einem zweiten Schritt wird überprüft, ob die Person, die anhand der im ersten Schritt herangezogenen Daten erkannt wurde, bzw. die sie vorgibt zu sein, auch tatsächlich die zu identifizierende Person ist. Um dies sicherzustellen, wird auf die Eingabe eines geheimen Passworts, einer PIN Nummer und eines ähnlichen Merkmals zurückgegriffen. Dabei können auch biometrische Merkmale, wie Stimme, Gesichtsscan, Fingerabdruck, etc. verwendet werden.

Allerdings ist diese zweistufige Vorgehensweise bislang notwendig, da biometrische Merkmale bislang nicht allein für die Identifizierung und Authentifizierung einer Person bzw. eines Nutzers genutzt werden können. Dies resultiert aus dem Umstand, dass die derzeit zur Verfügung stehende Rechenleistung nicht ausreicht, um aus einer großen Menge biometrischer Referenzdaten einen für einen jeweiligen sich authentifizieren wollenden Nutzer den passenden Datensatz zu finden. Das bedeutet, dass es bisher zu aufwändig, zu rechenintensiv und damit zu teuer ist, biometrische Daten, wie bspw. einen Sprachabdruck bzw. eine Stimme mit einer großen Menge an Referenzsprachabdrücken, die in einer Datenbank gespeichert sind, abzugleichen, um damit in "near-realtime", d.h. in fast Echtzeit, eine Person bzw. einen Nutzer zu identifizieren und zu authentifizieren.

Aus dem geschilderten Problem heraus, sind die bislang verwendeten Authentifizierungsverfahren durch ihre Struktur im Einsatz beschränkt. Es ist derzeit nicht möglich, einen Nutzer bspw. ausschließlich anhand seiner Stimme zu identifizieren und zu authentifizieren.

Es war demnach eine Aufgabe der vorliegenden Erfindung, eine Möglichkeit vorzusehen, allein mit der Stimme eine Identifizierung und Authentifizierung eines Nutzers, insbesondere eines Menschen in einem IP Netz vornehmen zu können.

### Zusammenfassung der Erfindung

Zur Lösung der voranstehend genannten Aufgabe wird ein Verfahren mit den Merkmalen des Patentanspruchs 1, ein System mit den Merkmalen des Patentanspruchs 9 und eine Sprachverarbeitungsplattform mit den Merkmalen des Patentanspruchs 13 vorgeschlagen. Weitere Ausgestaltungen sind den jeweiligen Unteransprüchen und der Beschreibung sowie den Zeichnungen zu entnehmen.

Ein Gegenstand der Erfindung ist ein Verfahren zum Identifizieren und Authentifizieren eines Nutzers, insbesondere eines Menschen, um dem Nutzer Zugang zu einem gesicherten Bereich in einem IP Netz, insbesondere zu vertraulichen (d.h. gesicherten) Daten und/oder Diensten, zu gewähren, wobei das Verfahren mindestens die folgende Schritte umfasst:
- Empfangen, mittels eines Audio-fähigen Geräts, einer von dem Nutzer in das Audio-fähige Gerät gesprochenen Spracheingabe,
- Transformieren der empfangenen Spracheingabe, mittels des Audio-fähigen Geräts, in eine Abfolge von Audiofragmenten, wobei die jeweiligen Audiofragmente ein vorgegebenes Format haben und die Abfolge der Audiofragmente einen Sprachabdruck bildet,
- Übertragen der Audiofragmente an eine an einem mit dem gesicherten Bereich in operativer Verbindung stehenden Zielort lokalisierten Sprachverarbeitungsplattform,
- nach Erhalt der jeweiligen Audiofragmente in der Sprachverarbeitungsplattform, sequentiell entsprechend der Abfolge der Audiofragmente für jedes empfangene Audiofragment: Analysieren des jeweiligen Audiofragments auf spezifische Charakteristika, Vergleichen des jeweiligen Audiofragments bzw. der spezifischen Charakteristika des jeweiligen Audiofragments mit einer Menge von in einer Referenzdatenbank gespeicherten potentiell mit dem Sprachabdruck übereinstimmenden Referenzsprachabdrücken, um einen übereinstimmenden Referenzsprachabdruck zu finden, Berechnen eines Vertrauenswerts für jeden gespeicherten potentiell übereinstimmenden Referenzsprachabdruck in Bezug zu dem jeweiligen Audiofragment, Reduzieren der Menge an potentiell übereinstimmenden Referenzsprachabdrücken für einen nachfolgenden Durchgang mit dem jeweiligen in der Abfolge nachfolgenden Audiofragment durch Verwerfen jedes gespeicherten potentiell übereinstimmenden Referenzsprachabdrucks, dessen Vertrauenswert unter einem gegebenen Schwellenwert liegt, aus der Menge an potentiell übereinstimmenden Referenzsprachabdrücken, und
- rekursives Vergleichen des in der Abfolge jeweils nachfolgenden Audiofragments nur mit den in der Menge jeweils verbleibenden potentiell übereinstimmenden Referenzsprachabdrücken aus der Referenzdatenbank bis nur ein Referenzsprachabdruck als möglicher übereinstimmender Referenzsprachabdruck in der Menge verbleibt.

Das Analysieren des jeweiligen Audiofragments auf spezifische Charakteristika kann implizit mit dem Schritt des Vergleichens des jeweiligen Audiofragments mit der Menge von in der Referenzdatenbank gespeicherten potentiell mit dem Sprachabdruck übereinstimmenden Referenzsprachabdrücken erfolgen.

Der gesicherte Bereich in einem IP Netz definiert einen Bereich, bspw. einen Speicherbereich, bspw. für Daten, und/oder einen Servicebereich mit daraus abrufbaren Diensten, der einem Nutzer nur nach erfolgreicher Identifizierung und Authentifizierung des Nutzers zugänglich ist bzw. gemacht wird.

Der gesicherte Bereich oder zumindest ein Teil davon kann dabei auch in einer Cloud lokalisiert sein. Dementsprechend sind auch die vertraulichen Daten zumindest zum Teil in der Cloud abgelegt bzw. sind die vertraulichen Dienste in der Cloud implementiert und dort ausführbar. Die Sprachverarbeitungsplattform selbst kann vollständig oder teilweise in einer Cloud lokalisiert bzw. implementiert sein.

Ein IP Netz arbeitet mit dem IP-Protokoll und einer Datenpaketvermittlung. In der Regel besteht ein IP Netz aus Teilnetzen, die über Router oder Switches an ein Backbone-Netz angeschlossen werden, das die Kommunikationsinfrastruktur darstellt. Die Teilnetze, d.h. die autonomen Systeme (AS), sind über sogenannte Core-Gateways miteinander verbunden. Das Backbone-Netz kann das Internet sein oder ein anderes IP-basiertes Netzwerk.

In bevorzugter Ausgestaltung der Erfindung handelt es sich bei einem jeweiligen Nutzer um einen jeweiligen Menschen.

Die Referenzdatenbank umfasst eine Anzahl von Referenzsprachabdrücken, wobei jeder Referenzsprachabdruck mit (genau) einem Nutzer assoziiert ist, d.h. jeder Referenzsprachabdruck ist genau einem Nutzer zugeordnet. Demnach ist mit Hilfe des nach Abschluss der Rekursion in der Menge an potentiell übereinstimmenden Referenzsprachabdrücken verbleibenden Referenzsprachabdrucks genau ein Nutzer identifizierbar, nämlich der Nutzer, der mit dem verbleibenden Referenzsprachabdruck assoziiert ist. In Abhängigkeit von dem nachfolgend beschriebenen und zu berechnenden Zuverlässigkeitswert wird dieser Nutzer als der sich identifizieren und authentifizieren wollende Nutzer, der die Spracheingabe in das Audio-fähige Gerät gemacht, d.h. gesprochen, hat, erkannt und ein Zugang zu dem gesicherten Bereich kann gegeben werden bzw. ein Zugang zu dem gesicherten Bereich wird gegeben.

Durch das vorgeschlagene Verfahren ist es möglich, einen Nutzer nur anhand seiner Stimme zu identifizieren und zu authentifizieren, ohne dass hierfür ein zusätzliches Merkmal herangezogen werden muss. Dies basiert erfindungsgemäß auf einem systematischen, nebenläufigen und parallelen Berechnen großer Datenmengen in einem Ausschlussverfahren.

Das erfindungsgemäße Verfahren ist universell anwendbar auf jede per IP Protokoll vorgenommene Audioübertragung und ist damit unabhängig von einem jeweiligen Eingabekanal, über den die Spracheingabe aufgenommen wird. Die Spracheingabe kann aus einer Webseite, einer mobilen App (Applikation) oder jedem anderen Gerät, welches ein Mikrofon besitzt und Audio-Daten per IP Protokoll übertragen kann und damit im Sinne der vorliegenden Offenbarung "Audio-fähig" ist, kommen. Eine Spracheingabe im Sinne der vorliegenden Offenbarung umfasst jede Art von akustischer Äußerung, die von einem Mikrofon in Form von Audio-Daten erfassbar und aufnehmbar ist.

In einem IP Netz werden zu übertragende Audio-Daten, zu denen auch Spracheingaben gehören, nicht On-Block, sondern aufgeteilt auf IP-Pakete übertragen. Bei einer solchen Übertragung von IP-Paketen, auch Streaming genannt, wie bspw. bei IP Telefonaten, wird in der Regel mit jedem IP Paket eine vordefinierte Länge an Audiomaterial, beispielsweise etwa 20ms Audiomaterial übertragen. Die vordefinierte Länge an Audiomaterial, die in einem IP Paket übertragen werden kann, entspricht in der vorliegenden Offenbarung bspw. dem voranstehend genannten vorgegebenen Format eines jeweiligen Audiofragments und definiert demnach das Audiofragment pro IP Paket. Die vordefinierte Länge bzw. Übertragungslänge an Audiomaterial kann in Abhängigkeit von dem zugrunde liegenden IP Netz und dessen Netzwerkstruktur variieren.

Erfindungsgemäß startet eine Verarbeitung der übertragenen Audio-Daten bereits mit Eingang des ersten IP-Pakets am Zielort, d.h. ggf. bereits bevor alle zu übertragenden Audio-Daten übertragen und am Zielort eingegangen sind. Unter Verarbeitung ist hierbei erfindungsgemäß ein Vergleichen eines pro eingegangenem IP-Paket eingegangenen Audiofragments mit entsprechenden Audiofragmenten aller in einer Referenzdatenbank hinterlegten, d.h. gespeicherten Referenzsprachabdrücken zu verstehen. Ein Vergleich mit "entsprechenden" Audiofragmenten soll hier bedeuten, dass das jeweilige Audiofragment entsprechend seiner Stellung in der Abfolge der Audiofragmente der Spracheingabe mit allen Audiofragmenten der gespeicherten Referenzsprachabdrücke verglichen wird, deren jeweilige Stellung in der Abfolge der Audiofragmente der jeweiligen Referenzsprachabdrücke der Stellung des jeweiligen Audiofragments in der Abfolge der Audiofragmente der Spracheingabe entspricht.

Durch Verwerfen jedes gespeicherten potentiell übereinstimmenden Referenzsprachabdrucks, dessen Vertrauenswert unter einem gegebenen Schwellenwert liegt, aus der Menge an potentiell übereinstimmenden Referenzsprachabdrücken, wird erfindungsgemäß eine Menge möglicher Treffer, d.h. die Menge an potentiell übereinstimmenden Referenzsprachabdrücken mit jedem empfangenen und analysierten Audio-Fragment reduziert.

Der Vertrauenswert wird mit statistischen Methoden und einem dort verwendeten Konfidenzintervall berechnet. Das Konfidenzintervall gibt einen Bereich an, der mit einer gewissen Wahrscheinlichkeit, dem sogenannten Konfidenzniveau, einen gesuchten Parameter, bspw. einen Mittelwert einer Verteilung einer Zufallsvariablen einschließt. In dem vorliegenden Fall ist der gesuchte Parameter bspw. der korrekte Sprachabdruck, d.h. der aus der Spracheingabe gebildete Sprachabdruck, der sich in der Gesamtmenge aller in der Referenzdatenbank hinterlegten Referenzsprachabdrücke mit einer gewissen Wahrscheinlichkeit befindet bzw. wiederfindet. Die Formel zur Berechnung des Konfidenzintervalls variiert, basierend auf dem gesuchten Parameter, den man zugrunde legt. Dies kann bspw. ein jeweiliger Mittelwert oder eine jeweilige Standardabweichung sein, um am Ende einer Iteration, den einen Sprachabdruck mit dem höchsten Vertrauenswert zu identifizieren. Die minimal nötige Höhe des Vertrauenswertes stellt den Schwellenwert dar und wird vor der Anwendung des erfindungsgemäßen Verfahrens festgelegt, z.B. ein minimal notwendiger Vertrauenswert muss mind. 98% betragen, d.h. der Schwellenwert entspricht 98%.

Zur Berechnung des Vertrauenswertes wird ein vorab erstelltes Sprachmodell verwendet, das bspw. mittels maschinellen Lernens erstellt wurde. Hierbei werden auf der Grundlage von sogenannten Trainingsdaten, die vergleichbares Audiomaterial bzw. Sprachabdrücke bzw. Audiofragmente von Sprachabdrücken, die insbesondere von jeweiligen von jeweiligen Nutzern gesprochenen Spracheingaben abgeleitet bzw. gebildet wurden, umfassen, Merkmale identifiziert, die beim späteren Einsatz des Modells genutzt werden können. In der vorliegenden Offenbarung wird davon ausgegangen, dass ein entsprechendes "Referenzsprachmodell" vorhanden ist.

Mit jedem vorgenommenen Vergleich (pro Rekursionsschleife) wird die Menge der in Frage kommenden, d.h. der potentiell übereinstimmenden Referenzsprachabdrücke so weit reduziert, dass letztlich nur ein potentiell übereinstimmender Referenzsprachabdruck verbleibt, d.h. dass die Menge der potentiell übereinstimmenden Referenzsprachabdrücke letztlich nur noch einen Referenzsprachabdruck umfasst, der mit der Spracheingabe am ehesten, d.h. mit größter Wahrscheinlichkeit gegenüber den aus der Menge verworfenen Referenzsprachabdrücken übereinstimmt, so dass der Nutzer, der die Spracheingabe in das Audio-fähige Gerät (mit seiner Stimme) gesprochen hat, darüber mit einer berechenbaren Zuverlässigkeit (im Folgenden auch Zuverlässigkeitswert genannt) eindeutig identifiziert und authentifiziert werden kann. Jeder der potentiell übereinstimmenden Referenzsprachabdrücke ist jeweils mit genau einem Nutzer bzw. mit dessen Stimme assoziiert, d.h. ein jeweiliger potentiell übereinstimmender Referenzsprachabdruck ist genau einem Nutzer zugeordnet.

Damit wird das voranstehend erwähnte Problem, ein weiteres Merkmal zur Identifizierung und Authentifizierung zu benötigen, eliminiert.

In weiterer Ausgestaltung des erfindungsgemäßen Verfahrens umfasst das rekursive Vergleichen des jeweils nächsten Audiofragments in der Abfolge der Audiofragmente ein rekursives Verwerfen weiterer Referenzsprachabdrücke aus der Menge an potentiell übereinstimmenden Referenzsprachabdrücken bis nur ein Referenzsprachabdruck als möglicher übereinstimmender Referenzsprachabdruck in der Menge an potentiell übereinstimmenden Referenzsprachabdrücken verbleibt.

In noch weiterer Ausgestaltung des erfindungsgemäßen Verfahrens umfasst das Verfahren ferner: Berechnen eines Identifikationsergebnisses nach Abschluss der Rekursion durch Berechnen eines Zuverlässigkeitswerts basierend auf einer Menge an im Laufe der Rekursion analysierten Audiofragmenten und einer Übereinstimmungswahrscheinlichkeit der Spracheingabe mit dem zuletzt verbliebenen Referenzsprachabdruck aus der Referenzdatenbank. Bei der Berechnung des Zuverlässigkeitswertes wird nicht einfach nochmal das Konfidenzintervall (aus den Einzelvergleichen) berechnet. Vielmehr wird ein Wert ermittelt, der eine Berechnung ist aus dem finalen Konfidenzintervall (d.h. das Konfidenzintervall des letzten Rekursionsdurchgangs) sowie der Anzahl von benötigten Rekursionsdurchgängen, um den aus der Menge verbleibenden Referenzsprachabdruck mit dem höchsten Vertrauenswert zu identifizieren, kombiniert mit dem statistischen Mittelwert und der Variation aller Konfidenzintervalle die für diesen Referenzsprachabdruck ermittelt wurden. Berechnet wird dies über alle Rekursionen, d.h. alle Rekursionsdurchgänge, die notwendig waren, um den final verbleibenden Referenzsprachabdruck zu identifizieren.

Das Identifikationsergebnis zeigt an, ob ein Nutzer aus der Referenzdatenbank, in der verschiedene Nutzer mit diesen jeweils zugeordneten Referenzsprachabdrücken hinterlegt sind, identifiziert werden konnte und wenn ja, welcher Nutzer aus der Referenzdatenbank identifiziert wurde. Ob ein Nutzer identifiziert werden konnte, wird in Abhängigkeit von dem voranstehend genannten Zuverlässigkeitswert festgelegt. Unterschreitet der Zuverlässigkeitswert einen vorgegebenen minimalen Wert, wird kein Nutzer erkannt. Das bedeutet, dass die berechnete Übereinstimmungswahrscheinlichkeit unterhalb einer vorgegebenen minimalen Übereinstimmungswahrscheinlichkeit liegt und/oder dass die Menge an analysierten Referenzsprachabdrücken eine vorgegebene maximale Menge an zu analysierenden Referenzsprachabdrücken übersteigt. Wird kein Nutzer erkannt, umfasst das Identifikationsergebnis eine entsprechende Notiz, die wiederum an das Audio-fähige Gerät übertragen und von diesem bspw. akustisch und/oder visuell angezeigt wird bzw. werden kann. Ist jedoch der Zuverlässigkeitswert größer oder gleich dem vorgegebenen minimalen Wert, wird ein Nutzer erkannt. Das bedeutet, dass die berechnete Übereinstimmungswahrscheinlichkeit größer oder gleich der vorgegebenen minimalen Übereinstimmungswahrscheinlichkeit ist und dass die Menge an analysierten Referenzsprachabdrücken eine vorgegebene maximale Menge an zu analysierenden Referenzsprachabdrücken nicht übersteigt. Wird ein Nutzer erkannt, kann direkt, d.h. ohne Zwischenergebnis, dass überhaupt ein Nutzer erkannt wurde, angegeben werden, welcher Nutzer entsprechend dem verbliebenen Referenzsprachabdruck erkannt wurde. Das Erkennen des Nutzers, d.h. dessen erfolgreiche Identifizierung und Authentifizierung, geht einher bzw. wird gefolgt von einem dem Nutzer gewährten Zugang zu dem gesicherten Bereich in dem IP Netz. Der Nutzer kann somit bspw. in dem gesicherten Bereich hinterlegte Daten einsehen und/oder in dem gesicherten Bereich implementierte und laufende Dienste in Anspruch nehmen. Der Zugang zu dem gesicherten Bereich wird von der Sprachverarbeitungsplattform gewährt bzw. zumindest initiiert bzw. getriggert.

In weiterer Ausgestaltung des erfindungsgemäßen Verfahrens wird das Identifikationsergebnis an das Audio-fähige Gerät zurückgemeldet.

Dabei ist es ferner denkbar, dass das Audio-fähige Gerät das Identifikationsergebnis dem Nutzer bestätigt, insbesondere dem Nutzer eine Audioausgabe und/oder eine auf einer Anzeigeeinheit sichtbare visuelle Anzeige bereitstellt. Bei einem erkannten Nutzer kann eine derartige Audioausgabe bspw. in Form einer Begrüßungsformel, wie bspw. "Hallo Frau Muster" erfolgen.

Wie bereits voranstehend beschrieben werden die jeweiligen Audiofragmente vorzugsweise mit einer vorgegebenen Audio-Übertragungslänge in einem jeweiligen IP Paket übertragen. Dabei entspricht die Audio-Übertragungslänge dem vorgegebenen Format des jeweiligen Audiofragments.

In noch weiterer Ausgestaltung des erfindungsgemäßen Verfahrens wird das rekursiv durchgeführte Vergleichen des jeweiligen Audiofragments mit einer Menge von in einer Referenzdatenbank gespeicherten potentiell übereinstimmenden Referenzsprachabdrücken durch ein Vergleichen des jeweiligen Audiofragments durch einen Machine-Learning basierten Algorithmus mit entsprechenden Audiofragmenten der von der Menge umfassten potentiell übereinstimmenden Referenzsprachabdrücken durchgeführt.

Ein weiterer Gegenstand der Erfindung ist ein System zum Identifizieren und Authentifizieren eines Nutzers, um dem Nutzer Zugang zu einem gesicherten Bereich in einem IP Netz, insbesondere zu vertraulichen Daten und/oder Diensten, zu gewähren, wobei das System mindestens umfasst:
- ein Audio-fähiges Gerät, das dazu ausgebildet ist, eine von einem Nutzer in das Audio-fähige Gerät gesprochene Spracheingabe zu empfangen, die empfangene Spracheingabe in eine Abfolge von Audiofragmente zu transformieren, wobei die jeweiligen Audiofragmente ein vorgegebenes Format haben und die Abfolge der Audiofragmente einen Sprachabdruck bildet, und die Audiofragmente an eine an einem mit dem gesicherten Bereich in operativer Verbindung stehenden Zielort lokalisierte Sprachverarbeitungsplattform zu übermitteln,
- die Sprachverarbeitungsplattform, die dazu ausgelegt ist, nach Erhalt der jeweiligen Audiofragmente, sequentiell entsprechend der Abfolge der Audiofragmente für jedes empfangene Audiofragment folgende Schritte auszuführen: Analysieren des jeweiligen Audiofragments auf spezifische Charakteristika, Vergleichen des jeweiligen Audiofragments bzw. der spezifischen Charakteristika des jeweiligen Audiofragments mit einer Menge von in einer Referenzdatenbank gespeicherten potentiell mit dem Sprachabdruck übereinstimmenden Referenzsprachabdrücken, um einen übereinstimmenden Referenzsprachabdruck zu finden, Berechnen eines Vertrauenswerts für jeden gespeicherten potentiell übereinstimmenden Referenzsprachabdruck in Bezug zu dem jeweiligen Audiofragment, Verwerfen jedes gespeicherten potentiell übereinstimmenden Referenzsprachabdrucks, dessen Vertrauenswert unter einem gegebenen Schwellenwert liegt, aus der Menge an potentiell übereinstimmenden Referenzsprachabdrücken, und
rekursives Vergleichen des in der Abfolge jeweils nachfolgenden Audiofragments nur mit den in der Menge jeweils verbleibenden potentiell übereinstimmenden Referenzsprachabdrücken aus der Referenzdatenbank bis nur ein Referenzsprachabdruck als möglicher übereinstimmender Referenzsprachabdruck in der Menge verbleibt.

Die Referenzdatenbank kann ebenfalls eine Komponente des Systems sein, zumindest aber steht die Referenzdatenbank in kommunikativer Verbindung mit der Sprachverarbeitungsplattform, d.h. Daten können zwischen der Referenzdatenbank und dem System bzw. der Sprachverarbeitungsplattform ausgetauscht werden. Die Referenzdatenbank umfasst eine Anzahl von Referenzsprachabdrücken, wobei jeder Referenzsprachabdruck mit (genau) einem Nutzer assoziiert ist, d.h. jeder Referenzsprachabdruck ist genau einem Nutzer zugeordnet. Diese jeweilige Zuordnung ist zusammen mit dem jeweiligen Referenzsprachabdruck ebenfalls in der Referenzdatenbank hinterlegt. Demnach kann mit Hilfe des nach Abschluss der Rekursion in der Menge an potentiell übereinstimmenden Referenzsprachabdrücken verbleibenden Referenzsprachabdrucks genau ein Nutzer identifiziert werden, nämlich der Nutzer, der mit dem verbleibenden Referenzsprachabdruck assoziiert ist bzw. der dem verbleibenden Referenzsprachabdruck zugeordnet ist.

Der gesicherte Bereich, die Referenzdatenbank und/oder die Sprachverarbeitungsplattform können jeweils vollständig oder teilweise in einer Cloud lokalisiert bzw. implementiert sein.

Der Zielort, d.h. die am Zielort lokalisierte Sprachverarbeitungsplattform steht in operativer Verbindung mit dem gesicherten Bereich bedeutet, dass die Sprachverarbeitungsplattform einen Zugang zu dem gesicherten Bereich gewähren kann bzw. gewährt, wenn ein Nutzer aufgrund seiner Spracheingabe identifiziert und authentifiziert werden konnte.

In einer Ausgestaltung des erfindungsgemäßen Systems, ist die Sprachverarbeitungsplattform ferner dazu ausgelegt, nach Abschluss der Rekursion durch Berechnen eines Zuverlässigkeitswerts basierend auf einer Menge an analysierten Audiofragmenten und einer Übereinstimmungswahrscheinlichkeit der Spracheingabe mit dem zuletzt verbliebenen Referenzsprachabdruck aus der Referenzdatenbank ein Identifikationsergebnis zu berechnen, wobei das Identifikationsergebnis anzeigt, welcher Nutzer aus der Referenzdatenbank identifiziert wurde, und das Identifikationsergebnis an das Audio-fähige Gerät zurückzumelden.

In weiterer Ausgestaltung des erfindungsgemäßen Systems ist das Audio-fähige Gerät dazu ausgebildet, das Identifikationsergebnis dem Nutzer anzuzeigen, insbesondere eine Audioausgabe dem Nutzer bereitzustellen, insbesondere in Form einer Begrüßungsformel.

Das vorgestellte System ist insbesondere dazu ausgelegt, das erfindungsgemäße Verfahren auszuführen.

Ein noch weiterer Gegenstand der vorliegenden Erfindung ist eine Sprachverarbeitungsplattform zum Identifizieren und Authentifizieren eines Nutzers, um dem Nutzer Zugang zu einem gesicherten Bereich in einem IP Netz, insbesondere zu vertraulichen Daten und/oder Diensten, zu gewähren, wobei die Sprachverarbeitungsplattform an einem mit dem gesicherten Bereich in operativer Verbindung stehenden Zielort lokalisiert ist und dazu ausgelegt ist, Audiofragmente einer Abfolge von Audiofragmenten von einem Audio-fähigen Gerät zu empfangen, und nach Erhalt der jeweiligen Audiofragmente, sequentiell entsprechend der Abfolge der Audiofragmente für jedes empfangene Audiofragment folgende Schritte auszuführen: Analysieren des jeweiligen Audiofragments auf spezifische Charakteristika, Vergleichen des jeweiligen Audiofragments bzw. der spezifischen Charakteristika des jeweiligen Audiofragments mit einer Menge von in einer Referenzdatenbank gespeicherten potentiell mit dem Sprachabdruck übereinstimmenden Referenzsprachabdrücken, um einen übereinstimmenden Referenzsprachabdruck zu finden, Berechnen eines Vertrauenswerts für jeden gespeicherten potentiell übereinstimmenden Referenzsprachabdruck in Bezug zu dem jeweiligen Audiofragment, Verwerfen jedes gespeicherten potentiell übereinstimmenden Referenzsprachabdrucks, dessen Vertrauenswert unter einem gegebenen Schwellenwert liegt, aus der Menge an potentiell übereinstimmenden Referenzsprachabdrücken, und rekursives Vergleichen des in der Abfolge jeweils nachfolgenden Audiofragments nur mit den in der Menge jeweils verbleibenden potentiell übereinstimmenden Referenzsprachabdrücken aus der Referenzdatenbank bis nur ein Referenzsprachabdruck als möglicher übereinstimmender Referenzsprachabdruck in der Menge verbleibt.

In Ausgestaltung der Sprachverarbeitungsplattform verwendet die Sprachverarbeitungsplattform zum Vergleichen des jeweiligen Audiofragments mit entsprechenden Audiofragmenten der von der Menge umfassten potentiell übereinstimmenden Referenzsprachabdrücken einen Machine-Learning basierten Algorithmus.

Die Referenzdatenbank kann ebenfalls eine Komponente der Sprachverarbeitungsplattform sein, zumindest aber steht die Referenzdatenbank in kommunikativer Verbindung mit der Sprachverarbeitungsplattform. Der gesicherte Bereich, die Referenzdatenbank und/oder die Sprachverarbeitungsplattform können jeweils vollständig oder teilweise in einer Cloud lokalisiert bzw. implementiert sein.

In "operativer Verbindung stehen" umfasst im Rahmen der vorliegenden Offenbarung, dass eine Komponente, die mit einer anderen Komponente oder einer Stelle in operativer Verbindung steht zum einen in diese andere Komponente oder an dieser Stelle integriert sein kann, zumindest aber Daten an die andere Komponente oder die Stelle übermitteln kann und ggf. direkt Einfluss, bspw. in Form einer Steuerung, auf die andere Komponente oder die Stelle nehmen kann. So kann bspw. die Sprachverarbeitungsplattform, die an einem Zielort lokalisiert ist, der in operativer Verbindung mit dem geschützten Bereich steht, dahingehend auf den geschützten Bereich Einfluss nehmen, dass sie diesen für einen Nutzer, der mittels des erfindungsgemäßen Verfahrens bzw. mittels der Sprachverarbeitungsplattform erkannt, identifiziert und authentifiziert wurde, zugänglich macht.

Ferner betrifft die Erfindung ein Computerprogrammprodukt zum Identifizieren und Authentifizieren eines Nutzers, um dem Nutzer Zugang zu einem gesicherten Bereich in einem IP Netz, insbesondere zu vertraulichen Daten und/oder Diensten, zu gewähren, wobei das Computerprogrammprodukt ein Speichermedium mit einem Programmcode umfasst, wobei der Programmcode dazu ausgelegt ist, ein erfindungsgemäßes Verfahren auszuführen, wenn der Programmcode auf mindestens einem Prozessor implementiert und ausgeführt wird. Vorzugsweise ist der mindestens eine Prozessor mindestens eine Komponente des erfindungsgemäßen Systems und/oder der erfindungsgemäßen Sprachverarbeitungsplattform. Der mindestens eine Prozessor kann dabei auch in einer Cloud lokalisiert sein. Der Programmcode kann auf einem oder auf mehreren Prozessoren, die bspw. auf mehrere Komponenten des erfindungsgemäßen Systems verteilt sind, implementiert und ausgeführt werden. Dabei können die Prozessoren an einer Stelle lokalisiert sein oder auf mehrere Stellen verteilt sein. Das Speichermedium kann dabei eine CD, eine DVD, ein USB Stick, ein Speicherchip, eine Festplatte, ein Speicherbereich in einer Cloud oder eine Kombination der voranstehend genannten Möglichkeiten sein.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurzbeschreibung der Zeichnungen

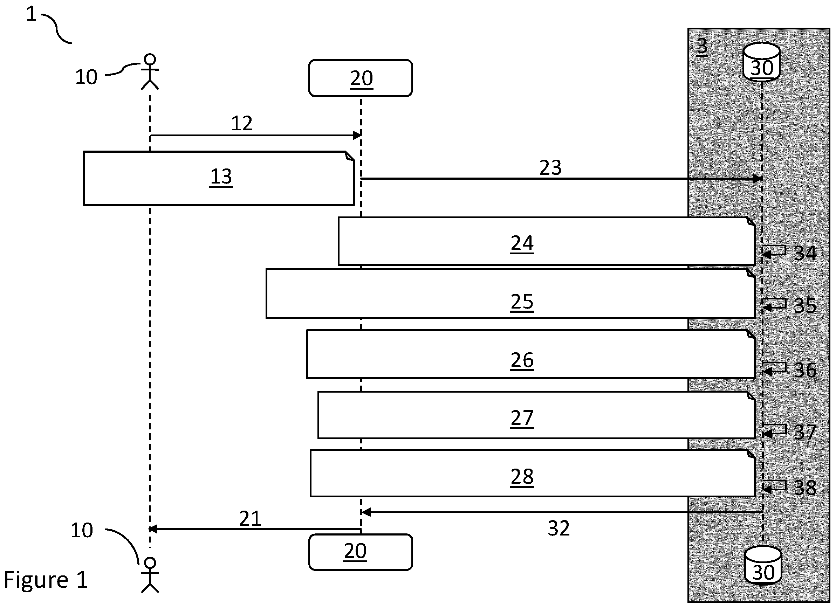

Die Erfindung ist anhand eines Ausführungsbeispiels in den Zeichnungen schematisch dargestellt und wird im Folgenden unter Bezugnahme auf die Zeichnungen ausführlich beschrieben. Es zeigt
- Fig. 1: ein Flussdiagramm eines Verfahrens nach einer Ausführungsform der Erfindung zum Identifizieren und Authentifizieren eines Nutzers in einem IP Netz.

### Detaillierte Beschreibung der Zeichnungen

Zur Ausführung einer Ausführungsform des erfindungsgemäßen Verfahrens wird eine Ausführungsform des erfindungsmäßigen Systems 1 genutzt. Das System 1 umfasst ein Audi-fähiges Gerät 20 und eine Sprachverarbeitungsplattform 3. Ein Nutzer 10 spricht in das Audio-fähige Gerät 20, wie bspw. ein Smartphone, ein Tablet, ein Notebook, oder dergleichen, eine Spracheingabe 12, auch als "voice input" bezeichnet. Das Audio-fähige Gerät 20 empfängt die von dem Nutzer 10 in das Audio-fähige Gerät 20 gesprochene Spracheingabe und transformiert 13 die empfangene Spracheingabe in eine Abfolge von Audiofragmenten, wobei die jeweiligen Audiofragmente ein vorgegebenes Format haben und die Abfolge der Audiofragmente einen Sprachabdruck bildet. Das vorgegebene Format kann dabei bspw. einer vorgegebenen Länge bzw. Übertragungslänge innerhalb eines IP Pakets, mit dem das Audiofragment zu übertragen ist, entsprechen. Das Audio-fähige Gerät 20 ist ferner dazu konfiguriert, eine kommunikative Verbindung, bspw. eine zumindest teilweise drahtlose Verbindung, zu der Sprachverarbeitungsplattform 3 aufzubauen. Die Audiofragmente werden sodann nacheinander, der Abfolge entsprechend, an die Sprachverarbeitungsplattform 3 über die kommunikative Verbindung übertragen 23, wobei jedes Audiofragment in einem jeweiligen IP-Paket übertragen wird. Dabei kann die vorgegebene Länge eines jeweiligen Audiofragments innerhalb eines entsprechenden jeweiligen IP Pakets bspw. 20 ms sein.

Nach Erhalt der jeweiligen Audiofragmente in der Sprachverarbeitungsplattform 3, führt die Sprachverarbeitungsplattform 3 mittels einer Audioverarbeitung 30, die auf mindestens einem Prozessor ausgeführt wird, sequentiell entsprechend der Abfolge der Audiofragmente für jedes empfangene Audiofragment die folgende Schritte durch:
24: Analysieren des jeweiligen Audiofragments auf spezifische Charakteristika, und
34: Vergleichen der spezifischen Charakteristika des jeweiligen Audiofragments mit einer Menge von in einer Referenzdatenbank gespeicherten potentiell übereinstimmenden Referenzsprachabdrücken, um einen übereinstimmenden Referenzsprachabdruck zu finden. Die Referenzdatenbank kann Teil der Sprachverarbeitungsplattform sein, zumindest aber ist sie für die Sprachverarbeitungsplattform zugänglich und diese kann aus der Referenzdatenbank gespeicherte Referenzsprachabdrücke über eine kommunikative Verbindung abrufen.
25: Berechnen eines Vertrauenswerts für jeden gespeicherten potentiell übereinstimmenden Referenzsprachabdruck in Bezug zu dem jeweiligen Audiofragment, und
35: Verwerfen jedes gespeicherten potentiell übereinstimmenden Referenzsprachabdrucks dessen Vertrauenswert in Bezug zu dem jeweiligen Audiofragment unter einem gegebenen Schwellenwert liegt, aus der Menge an potentiell übereinstimmenden Referenzsprachabdrücken. Der Schwellenwert wird vor dem Ablauf des Prozesses festgelegt, z.B. auf 98%, kann aber jederzeit geändert werden und ist durch empirische Verfahren (Testen und Beobachten) je nach Anwendung und Schwellenwertbedürfnisses anzupassen. Grenzen, innerhalb derer der Schwellwert liegen muss, werden in der Praxis Diensteindividuell, abhängig vom erforderlichen Sicherheitsniveau festgelegt.
   So erfordert bspw. ein Zugriff auf ein Bankkonto ein höheres Sicherheitsniveau als der Zugriff auf einen Dienst, um zum Beispiel Verbrauchsdaten für einen Stromzähler einzugeben.
26: Rekursives Vergleichen der jeweils in der Abfolge aufeinanderfolgenden Audiofragmente mit der jeweils verbleibenden Menge von in der Referenzdatenbank gespeicherten potentiell übereinstimmenden Referenzsprachabdrücken, bzw.
36: Wiederholen des Vergleichens für alle nacheinander der Abfolge entsprechend eingehenden Audiofragmente mit der jeweils verbleibenden Menge von in der Referenzdatenbank gespeicherten potentiell übereinstimmenden Referenzsprachabdrücken;
27: Rekursives Verwerfen jedes gespeicherten potentiell übereinstimmenden Referenzsprachabdrucks, dessen Vertrauenswert in Bezug zu dem jeweiligen gerade verglichenen Audiofragment unter dem gegebenen Schwellenwert liegt, aus der Menge an potentiell übereinstimmenden Referenzsprachabdrücken, und somit
37: rekursives Reduzieren der Menge an potentiell übereinstimmenden Referenzsprachabdrücken für einen jeweils nachfolgenden Durchgang mit dem jeweiligen in der Abfolge nachfolgenden Audiofragment bis nur ein Referenzsprachabdruck als möglicher übereinstimmender Referenzsprachabdruck in der Menge verbleibt.
28: Berechnen eines Identifikationsergebnisses nach Abschluss der Rekursion durch Berechnen eines Zuverlässigkeitswerts basierend auf einer Menge an analysierten Audiofragmenten und einer Übereinstimmungswahrscheinlichkeit der Spracheingabe mit dem zuletzt verbliebenen Referenzsprachabdruck aus der Referenzdatenbank;
38: Bestätigen oder Negieren einer erkannten Identität auf Basis des Identitätsergebnisses, d.h. in Abhängigkeit von dem berechneten Zuverlässigkeitswert, und
32: Mitteilen des Identifikationsergebnisses an das Audi-fähige Gerät 20.

Die Referenzdatenbank, die mit der die Sprachverarbeitungsplattform 3 in kommunikativer Verbindung steht, umfasst eine Anzahl von Referenzsprachabdrücken, wobei jeder Referenzsprachabdruck mit (genau) einem Nutzer assoziiert ist, d.h. jeder Referenzsprachabdruck ist genau einem Nutzer zugeordnet, was ebenfalls in der Referenzdatenbank abgespeichert ist. Demnach ist mit Hilfe des nach Abschluss der Rekursion in der Menge an potentiell übereinstimmenden Referenzsprachabdrücken verbleibenden Referenzsprachabdrucks und dessen aus der Referenzdatenbank abrufbaren Zuordnung zu einem Nutzer genau ein Nutzer identifizierbar, nämlich der Nutzer, der mit dem verbleibenden Referenzsprachabdruck assoziiert ist bzw. der dem verbleibenden Referenzsprachabdruck zugeordnet ist. In Abhängigkeit von dem berechneten Zuverlässigkeitswert wird dieser Nutzer als der sich identifizieren und authentifizieren wollende Nutzer, der die Spracheingabe in das Audio-fähige Gerät gemacht bzw. gesprochen hat, erkannt und als solcher in dem Identifikationsergebnis, explizit oder implizit, angegeben. Eine implizite Angabe des erkannten Nutzers in dem Identifikationsergebnis bedeutet bspw., dass dem Nutzer ohne weitere Nennung des erkannten Nutzers automatisch ein Zugang zu dem gesicherten Bereich gewährt wird. Alternativ kann der Nutzer zunächst bspw. durch eine Audioausgabe oder eine visuelle Ausgabe des Audio-fähigen Geräts als der erkannte Nutzer namentlich begrüßt werden. Dem erkannten Nutzer kann dann ein Zugang zu dem gesicherten Bereich gegeben werden bzw. dem erkannten Nutzer wird ein Zugang zu dem gesicherten Bereich gegeben.

Letztlich stellt das Audio-fähige Gerät 20 das Identifikationsergebnis dem Nutzer 10 bereit 21, insbesondere als eine visuelle Anzeige und/oder eine Audioausgabe, insbesondere bei erfolgreicher Identifizierung in Form einer Begrü-βungsformel. Im Falle, dass kein Nutzer identifiziert werden konnte, d.h. im Falle, dass der Zuverlässigkeitswert unterhalb eines vorgegebenen minimalen Zuverlässigkeitswerts liegt, wird das Identifikationsergebnis über das Audio-fähige Gerät dem Nutzer bspw. mit einer entsprechend abschlägigen Mitteilung bereitgestellt. Infolge der erfolgreichen Identifizierung und Authentifizierung wird dem Nutzer 10 Zugang zu dem gesicherten Bereich, insbesondere zu von dem Nutzer zur Einsicht gewünschten Daten und/oder zu von dem Nutzer gewünschten Diensten, gewährt.

### Bezugszeichenliste

- 1: System
- 3: Sprachverarbeitungsplattform
- 10: Nutzer
- 20: Audio-fähiges Gerät
- 30: Prozessor zur Sprachverarbeitung
- 12: Spracheingabe
- 13: Transformation der Spracheingabe in eine Abfolge von Audiofragmente
- 21: Bereitstellen des Identifikationsergebnisses
- 23: Übertragen der Abfolge der Audiofragmente an Sprachverarbeitungsplattform
- 24: Verfahrensschritt
- 25: Verfahrensschritt
- 26: Verfahrensschritt
- 27: Verfahrensschritt
- 28: Verfahrensschritt
- 32: Mitteilen des Identifikationsergebnisses an das Audio-fähige Gerät
- 34: Verfahrensschritt
- 35: Verfahrensschritt
- 36: Verfahrensschritt
- 37: Verfahrensschritt
- 38: Verfahrensschritt

## Patentansprüche

1. Verfahren zum Identifizieren und Authentifizieren eines Nutzers (10), um dem Nutzer (10) Zugang zu einem gesicherten Bereich in einem IP Netz, insbesondere zu vertraulichen Daten und/oder Diensten, zu gewähren, wobei das Verfahren mindestens die folgende Schritte umfasst:
- Empfangen (12), mittels eines Audio-fähigen Geräts (20), einer von dem Nutzer (10) in das Audio-fähige Gerät (20) gesprochenen Spracheingabe,
- Transformieren (13) der empfangenen Spracheingabe, mittels des Audio-fähigen Geräts (20), in eine Abfolge von Audiofragmenten, wobei die jeweiligen Audiofragmente ein vorgegebenes Format haben und die Abfolge der Audiofragmente einen Sprachabdruck bildet,
- Übertragen (23) der Audiofragmente an eine Sprachverarbeitungsplattform (3), wobei die jeweiligen Audiofragmente mit einer vorgegebenen Audio-Übertragungslänge in einem jeweiligen IP Paket übertragen werden,
- nach Erhalt der jeweiligen Audiofragmente in der Sprachverarbeitungsplattform (3), sequentiell entsprechend der Abfolge der Audiofragmente für jedes empfangene Audiofragment: Vergleichen (24, 34) des jeweiligen Audiofragments mit einer Menge von in einer Referenzdatenbank gespeicherten potentiell mit dem Sprachabdruck übereinstimmenden Referenzsprachabdrücken, um einen übereinstimmenden Referenzsprachabdruck zu finden, Berechnen eines Vertrauenswerts für jeden gespeicherten potentiell übereinstimmenden Referenzsprachabdruck in Bezug zu dem jeweiligen Audiofragment, Verwerfen (25, 35) jedes gespeicherten potentiell übereinstimmenden Referenzsprachabdrucks, dessen Vertrauenswert unter einem gegebenen Schwellenwert liegt, aus der Menge an potentiell übereinstimmenden Referenzsprachabdrücken, und rekursives Vergleichen (26, 36) des in der Abfolge jeweils nachfolgenden Audiofragments nur mit den in der Menge jeweils verbleibenden potentiell übereinstimmenden Referenzsprachabdrücken aus der Referenzdatenbank bis nur ein Referenzsprachabdruck als möglicher übereinstimmender Referenzsprachabdruck in der Menge verbleibt.

2. Verfahren nach Anspruch 1, bei dem das rekursive Vergleichen (26, 36) des jeweils nächsten Audiofragments in der Abfolge der Audiofragmente ferner ein rekursives Verwerfen (27, 37) weiterer Referenzsprachabdrücke aus der Menge an potentiell übereinstimmenden Referenzsprachabdrücken umfasst bis nur ein Referenzsprachabdruck als möglicher übereinstimmender Referenzsprachabdruck in der Menge verbleibt.

3. Verfahren nach Anspruch 1 oder 2, das ferner umfasst: Berechnen eines Identifikationsergebnisses (28, 38) nach Abschluss der Rekursion durch Berechnen eines Zuverlässigkeitswerts basierend auf einer Menge an analysierten Audiofragmenten und einer Übereinstimmungswahrscheinlichkeit der Spracheingabe mit dem zuletzt verbliebenen Referenzsprachabdruck aus der Referenzdatenbank.

4. Verfahren nach Anspruch 3, bei dem das Identifikationsergebnis anzeigt, ob ein Nutzer identifiziert werden konnte oder nicht, und/oder im Falle, dass ein Nutzer identifiziert werden konnte, welcher Nutzer aus der Referenzdatenbank identifiziert wurde.

5. Verfahren nach Anspruch 3 oder 4, bei dem das Identifikationsergebnis von der Sprachverarbeitungsplattform (3) an das Audio-fähige Gerät (20) zurückgemeldet (32) wird.

6. Verfahren nach Anspruch 5, bei dem das Audio-fähige Gerät (20) das Identifikationsergebnis dem Nutzer (10) bereitstellt (21), insbesondere dem Nutzer eine visuelle Anzeige und/oder eine Audioausgabe bereitstellt, insbesondere, im Falle, dass ein Nutzer identifiziert werden konnte, in Form einer Begrüßungsformel.

7. Verfahren nach einem der voranstehenden Ansprüchen, bei dem das rekursiv durchgeführte Vergleichen der jeweiligen Audiofragmente mit einer Menge von in einer Referenzdatenbank gespeicherten potentiell mit dem Sprachabdruck übereinstimmenden Referenzsprachabdrücken mittels eines Vergleichens der jeweiligen Audiofragmente durch einen Machine-Learning basierten Algorithmus mit entsprechenden Audiofragmenten der von der Menge umfassten potentiell übereinstimmenden Referenzsprachabdrücken durchgeführt wird.

8. System (1) zum Identifizieren und Authentifizieren eines Nutzers (10), um dem Nutzer (10) Zugang zu einem gesicherten Bereich in einem IP Netz, insbesondere zu vertraulichen Daten und/oder Diensten, zu gewähren, wobei das System (1) mindestens umfasst:
- ein Audio-fähiges Gerät (20), das dazu ausgebildet ist, eine von einem Nutzer (10) in das Audio-fähige Gerät (20) gesprochene Spracheingabe zu empfangen, die empfangene Spracheingabe in eine Abfolge von Audiofragmenten zu transformieren, wobei die jeweiligen Audiofragmente ein vorgegebenes Format haben und die Abfolge der Audiofragmente einen Sprachabdruck bildet, und die Audiofragmente an eine Sprachverarbeitungsplattform (3) zu übermitteln, wobei die jeweiligen Audiofragmente mit einer vorgegebenen Audio-Übertragungslänge in einem jeweiligen IP Paket übertragen werden,
- die Sprachverarbeitungsplattform (3), die dazu ausgelegt ist, nach Erhalt der jeweiligen Audiofragmente, sequentiell entsprechend der Abfolge der Audiofragmente für jedes empfangene Audiofragment folgende Schritte auszuführen: Vergleichen des jeweiligen Audiofragments mit einer Menge von in einer Referenzdatenbank gespeicherten potentiell mit dem Sprachabdruck übereinstimmenden Referenzsprachabdrücken, um einen übereinstimmenden Referenzsprachabdruck zu finden, Berechnen eines Vertrauenswerts für jeden gespeicherten potentiell übereinstimmenden Referenzsprachabdruck in Bezug zu dem jeweiligen Audiofragment, Verwerfen jedes gespeicherten potentiell übereinstimmenden Referenzsprachabdrucks, dessen Vertrauenswert unter einem gegebenen Schwellenwert liegt, aus der Menge an potentiell übereinstimmenden Referenzsprachabdrücken, und rekursives Vergleichen des in der Abfolge jeweils nachfolgenden Audiofragments nur mit den in der Menge jeweils verbleibenden potentiell übereinstimmenden Referenzsprachabdrücken aus der Referenzdatenbank bis nur ein Referenzsprachabdruck als möglicher übereinstimmender Referenzsprachabdruck in der Menge verbleibt.

9. System nach Anspruch 8, bei dem die Sprachverarbeitungsplattform (3) ferner dazu ausgelegt ist, nach Abschluss der Rekursion durch Berechnen eines Zuverlässigkeitswerts basierend auf einer Menge an analysierten Audiofragmenten und einer Übereinstimmungswahrscheinlichkeit der Spracheingabe mit dem zuletzt verbliebenen Referenzsprachabdruck aus der Referenzdatenbank ein Identifikationsergebnis zu berechnen, wobei das Identifikationsergebnis anzeigt, ob ein Nutzer identifiziert werden konnte oder nicht, und/oder, im Falle, dass ein Nutzer identifiziert werden konnte, welcher Nutzer aus der Referenzdatenbank identifiziert wurde, und das Identifikationsergebnis an das Audio-fähige Gerät (20) zurückzumelden.

10. System nach Anspruch 9, bei dem das Audio-fähige Gerät (20) dazu ausgebildet ist, das Identifikationsergebnis dem Nutzer (10) anzuzeigen, insbesondere dem Nutzer (10) eine visuelle Anzeige und/ oder eine Audioausgabe bereitzustellen, insbesondere im Falle, dass ein Nutzer identifiziert werden konnte, in Form einer Begrüßungsformel.

11. System nach Anspruch 8, 9 oder 10, das dazu ausgelegt ist, ein Verfahren nach einem der Ansprüche 1 bis 8 auszuführen.

12. Sprachverarbeitungsplattform (3) zum Identifizieren und Authentifizieren eines Nutzers (10), um dem Nutzer (10) Zugang zu einem gesicherten Bereich in einem IP Netz, insbesondere zu vertraulichen Daten und/oder Diensten, zu gewähren, wobei die Sprachverarbeitungsplattform (3) dazu ausgelegt ist, einen Sprachabdruck als eine Abfolge von Audiofragmenten von einem Audio-fähigen Gerät (20) zu empfangen, wobei die jeweiligen Audiofragmente mit einer vorgegebenen Audio-Übertragungslänge in einem jeweiligen IP Paket übertragen werden, und nach Erhalt der jeweiligen Audiofragmente, sequentiell entsprechend der Abfolge der Audiofragmente für jedes empfangene Audiofragment folgende Schritte auszuführen: Vergleichen des jeweiligen Audiofragments mit einer Menge von in einer Referenzdatenbank gespeicherten potentiell mit dem empfangenen Sprachabdruck übereinstimmenden Referenzsprachabdrücken, um einen übereinstimmenden Referenzsprachabdruck zu finden, Berechnen eines Vertrauenswerts für jeden gespeicherten potentiell übereinstimmenden Referenzsprachabdruck in Bezug zu dem jeweiligen Audiofragment, Verwerfen jedes gespeicherten potentiell übereinstimmenden Referenzsprachabdrucks, dessen Vertrauenswert unter einem gegebenen Schwellenwert liegt, aus der Menge an potentiell übereinstimmenden Referenzsprachabdrücken, und rekursives Vergleichen des in der Abfolge jeweils nachfolgenden Audiofragments nur mit den in der Menge jeweils verbleibenden potentiell übereinstimmenden Referenzsprachabdrücken aus der Referenzdatenbank bis nur ein Referenzsprachabdruck als möglicher übereinstimmender Referenzsprachabdruck in der Menge verbleibt.

13. Sprachverarbeitungsplattform nach Anspruch 12, die zum Vergleichen des jeweiligen Audiofragments mit entsprechenden Audiofragmenten der von der Menge umfassten potentiell übereinstimmenden Referenzsprachabdrücken einen Machine-Learning basierten Algorithmus verwendet.

14. Computerprogrammprodukt zum Identifizieren und Authentifizieren eines Nutzers, um dem Nutzer Zugang zu einem gesicherten Bereich in einem IP Netz, insbesondere zu vertraulichen Daten und/oder Diensten, zu gewähren, wobei das Computerprogrammprodukt ein Speichermedium mit einem Programmcode umfasst, wobei der Programmcode dazu ausgelegt ist, ein Verfahren nach einem der Ansprüchen 1 bis 7 auszuführen, wenn der Programmcode auf mindestens einem Prozessor implementiert und ausgeführt wird.

## Claims

1. A method for identifying and authenticating a user (10) in order to grant the user (10) access to a secured area in an IP network, in particular to confidential data and/or services, the method comprising at least the following steps:
- receiving (12), by means of an audio-capable device (20), a voice input spoken by the user (10) into the audio-capable device (20),
- transforming (13) the received voice input, by means of the audio-capable device (20), into a sequence of audio fragments, wherein the respective audio fragments have a predetermined format and the sequence of the audio fragments forms a voiceprint,
- transmitting (23) the audio fragments to a speech processing platform (3), wherein the respective audio fragments are transmitted with a predetermined audio transmission length in a respective IP packet,
- after receipt of the respective audio fragments in the voice processing platform (3), sequentially according to the sequence of audio fragments for each received audio fragment: comparing (24, 34) the respective audio fragment with a set of reference voiceprints stored in a reference database potentially matching the voiceprint to find a matching reference voiceprint, calculating a confidence value for each stored potentially matching reference voiceprint with respect to the respective audio fragment, discarding (25, 35) each stored potentially matching reference voiceprint whose confidence value is below a given threshold from the set of potentially matching reference voiceprints, and recursively comparing (26, 36) the respective subsequent audio fragment in the sequence only with the set of respective remaining potentially matching reference voiceprints from the reference database until only one reference voiceprint remains in the set as possible matching reference voiceprint.

2. The method according to claim 1, wherein recursively comparing (26, 36) the respectively next audio fragment in the sequence of audio fragments further comprises recursively discarding (27, 37) further reference voiceprints from the set of potentially matching reference voiceprints until only one reference voiceprint remains in the set as possible matching reference voiceprint.

3. The method according to claim 1 or 2, further comprising: calculating an identification result (28, 38) after completion of the recursion by calculating a reliability value based on a set of analyzed audio fragments and a match probability of the voice input with the last remaining reference voiceprint from the reference database.

4. The method according to claim 3, wherein the identification result indicates whether a user could be identified or not, and/or in case a user could be identified, which user was identified from the reference database.

5. The method according to claim 3 or 4, wherein the identification result is reported back (32) by the voice processing platform (3) to the audio-capable device (20).

6. The method according to claim 5, wherein the audio-capable device (20) provides (21) the identification result to the user (10), in particular provides the user with a visual display and/or an audio output, in particular, in the case that a user could be identified, in the form of a salutation.

7. The method according to one of the preceding claims, wherein the recursively performed comparing of the respective audio fragments with a set of reference voiceprints stored in a reference database and potentially matching the voiceprint is performed by means of comparing the respective audio fragments by a machine learning based algorithm with corresponding audio fragments of the potentially matching reference voiceprints comprised by the set.

8. A system (1) for identifying and authenticating a user (10) in order to grant the user (10) access to a secured area in an IP network, in particular to confidential data and/or services, the system (1) comprising at least:
- an audio-capable device (20) configured to receive a voice input spoken by a user (10) into the audio-capable device (20), to transform the received voice input into a sequence of audio fragments, wherein the respective audio fragments have a predetermined format and the sequence of audio fragments forms a voiceprint, and to transmit the audio fragments to a voice processing platform (3), wherein the respective audio fragments are transmitted with a predetermined audio transmission length in a respective IP packet,
- the voice processing platform (3), which is designed to perform, upon receipt of the respective audio fragments, sequentially according to the sequence of the audio fragments, for each received audio fragment, the following steps: comparing the respective audio fragment with a set of reference voiceprints stored in a reference database potentially matching the voiceprint to find a matching reference voiceprint, calculating a confidence value for each stored potentially matching reference voiceprint with respect to the respective audio fragment, discarding each stored potentially matching reference voiceprint whose confidence value is below a given threshold from the set of potentially matching reference voiceprints, and recursively comparing the respective subsequent audio fragment in the sequence only with the set of respective remaining potentially matching reference voiceprints from the reference database until only one reference voiceprint remains in the set as possible matching reference voiceprint.

9. The system according to claim 8, wherein the voice processing platform (3) is further designed to calculate an identification result after completion of the recursion by calculating a reliability value based on a set of analyzed audio fragments and a match probability of the voice input with the last remaining reference voiceprint from the reference database, wherein the identification result indicates whether a user could be identified or not, and/or, in case a user could be identified, which user was identified from the reference database, and to report the identification result back to the audio-capable device (20).

10. The system according to claim 9, wherein the audio-capable device (20) is configured to indicate the identification result to the user (10), in particular to provide the user (10) with a visual display and/or an audio output, in particular in the case that a user could be identified, in the form of a salutation.

11. The system according to claim 8, 9 or 10, which is designed to carry out a method according to one of claims 1 to 8.

12. A voice processing platform (3) for identifying and authenticating a user (10) in order to grant the user (10) access to a secured area in an IP network, in particular to confidential data and/or services, wherein the voice processing platform (3) is designed to receive a voiceprint as a sequence of audio fragments from an audio-capable device (20), wherein the respective audio fragments are transmitted with a predetermined audio transmission length in a respective IP packet, and upon receipt of the respective audio fragments, to perform sequentially according to the sequence of the audio fragments, for each received audio fragment, the following steps: comparing the respective audio fragment with a set of reference voiceprints stored in a reference database potentially matching the received voiceprint to find a matching reference voiceprint, calculating a confidence value for each stored potentially matching reference voiceprint with respect to the respective audio fragment, discarding each stored potentially matching reference voiceprint whose confidence value is below a given threshold from the set of potentially matching reference voiceprints, and recursively comparing the respective subsequent audio fragment in the sequence only with the set of respective remaining potentially matching reference voiceprints from the reference database until only one reference voiceprint remains in the set as possible matching reference voiceprint.

13. The voice processing platform according to claim 12, which uses a machine learning based algorithm for comparing the respective audio fragment with corresponding audio fragments of the potentially matching reference voiceprints comprised by the set.

14. A computer program product for identifying and authenticating a user in order to grant the user access to a secured area in an IP network, in particular to confidential data and/or services, wherein the computer program product comprises a storage medium with a program code, wherein the program code is designed to carry out a method according to one of claims 1 to 7 when the program code is implemented and executed on at least one processor.

## Revendications

1. Procédé d'identification et d'authentification d'un utilisateur (10) permettant à l'utilisateur (10) d'accéder à une zone sécurisée dans un réseau IP, en particulier à des données et/ou des services confidentiels, le procédé comprenant au moins les étapes suivantes :
- la réception (12), au moyen d'un dispositif à capacité audio (20), d'une entrée vocale prononcée par l'utilisateur (10) dans le dispositif à capacité audio (20),
- la transformation (13) de l'entrée vocale reçue, au moyen du dispositif à capacité audio (20), en une séquence de fragments audio, les fragments audio respectifs ayant un format prédéterminé et la séquence de fragments audio formant une empreinte vocale,
- la transmission (23) des fragments audio à une plateforme de traitement de la parole (3), les fragments audio respectifs étant transmis avec une longueur de transmission audio prédéterminée dans un paquet IP respectif,
- après réception des fragments audio respectifs sur la plateforme de traitement de la parole (3), séquentiellement selon la séquence des fragments audio pour chaque fragment audio reçu : la comparaison (24, 34) du fragment audio respectif avec un ensemble d'empreintes vocales de référence potentiellement concordantes avec l'empreinte vocale, stockées dans une base de données de référence, afin de trouver une empreinte vocale de référence concordante, le calcul d'une valeur de confiance pour chaque empreinte vocale de référence potentiellement concordante stockée par rapport au fragment audio respectif, le rejet (25, 35) de chaque empreinte vocale de référence potentiellement concordante stockée, dont la valeur de confiance est inférieure à une valeur de seuil donnée, de l'ensemble d'empreintes vocales de référence potentiellement concordantes, et la comparaison récursive (26, 36) du fragment audio qui suit respectivement dans la séquence, uniquement avec les empreintes vocales de référence potentiellement concordantes respectives dans la base de données de référence qui restent dans l'ensemble, jusqu'à ce qu'il ne reste qu'une seule empreinte vocale de référence en tant qu'empreinte vocale de référence potentiellement concordante dans l'ensemble.

2. Procédé selon la revendication 1, dans lequel la comparaison récursive (26, 36) de chaque fragment audio suivant dans la séquence des fragments audio comprend en outre le rejet récursif (27, 37) d'autres empreintes vocales de référence de l'ensemble d'empreintes vocales de référence potentiellement concordantes jusqu'à ce qu'il ne reste qu'une seule empreinte vocale de référence en tant qu'empreinte vocale de référence potentiellement concordante dans l'ensemble.

3. Procédé selon la revendication 1 ou 2, comprenant en outre : le calcul d'un résultat d'identification (28, 38) à la fin de la récursion, en calculant une valeur de fiabilité sur la base d'une quantité de fragments audio analysés et d'une probabilité de correspondance de l'entrée vocale avec la dernière empreinte vocale de référence restante de la base de données de référence.

4. Procédé selon la revendication 3, dans lequel le résultat d'identification indique si un utilisateur a pu être identifié ou non, et/ou dans le cas où un utilisateur a pu être identifié, quel utilisateur a été identifié à partir de la base de données de référence.

5. Procédé selon la revendication 3 ou 4, dans lequel le résultat d'identification est renvoyé (32) par la plateforme de traitement de la parole (3) au dispositif à capacité audio (20).

6. Procédé selon la revendication 5, dans lequel le dispositif à capacité audio (20) fournit (21) le résultat d'identification à l'utilisateur (10), notamment un affichage visuel et/ou une sortie audio, en particulier, dans le cas où un utilisateur a pu être identifié, sous la forme d'une formule d'accueil.

7. Procédé selon l'une des revendications précédentes, dans lequel la comparaison récursive des fragments audio respectifs avec un ensemble d'empreintes vocales de référence potentiellement concordantes avec l'empreinte vocale, stockées dans une base de données de référence, est effectuée au moyen d'une comparaison des fragments audio respectifs, par un algorithme basé sur l'apprentissage automatique, avec des fragments audio respectifs des empreintes vocales de référence potentiellement concordantes comprises dans l'ensemble.

8. Système (1) d'identification et d'authentification d'un utilisateur (10) permettant à l'utilisateur (10) d'accéder à une zone sécurisée dans un réseau IP, en particulier à des données et/ou des services confidentiels, le système (1) comprenant au moins :
- un dispositif à capacité audio (20) conçu de manière à recevoir une entrée vocale prononcée par un utilisateur (10) dans le dispositif à capacité audio (20), à transformer l'entrée vocale reçue en une séquence de fragments audio, les fragments audio respectifs ayant un format prédéterminé et la séquence de fragments audio formant une empreinte vocale, et à transmettre les fragments audio à une plateforme de traitement de la parole (3), les fragments audio respectifs étant transmis avec une longueur de transmission audio prédéterminée dans un paquet IP respectif,
- la plateforme de traitement de la parole (3) conçue de manière à réaliser, après réception des fragments audio respectifs, séquentiellement selon la séquence des fragments audio, pour chaque fragment audio reçu, les étapes suivantes : la comparaison du fragment audio respectif avec un ensemble d'empreintes vocales de référence potentiellement concordantes avec l'empreinte vocale, stockées dans une base de données de référence, afin de trouver une empreinte vocale de référence concordante, le calcul, par rapport au fragment audio respectif, d'une valeur de confiance pour chaque empreinte vocale de référence potentiellement concordante stockée, le rejet de chaque empreinte vocale de référence potentiellement concordante stockée, dont la valeur de confiance est inférieure à une valeur de seuil donnée, de l'ensemble d'empreintes vocales de référence potentiellement concordantes, et la comparaison récursive du fragment audio qui suit respectivement dans la séquence, uniquement avec les empreintes vocales de référence potentiellement concordantes respectives dans la base de données de référence qui restent dans l'ensemble, jusqu'à ce qu'il ne reste qu'une seule empreinte vocale de référence en tant qu'empreinte vocale de référence potentiellement concordante dans l'ensemble.

9. Système selon la revendication 8, dans lequel la plateforme de traitement de la parole (3) est en outre conçue de manière à calculer un résultat d'identification à la fin de la récursion en calculant une valeur de fiabilité basée sur une quantité de fragments audio analysés et une probabilité de correspondance de l'entrée vocale avec la dernière empreinte vocale de référence restante de la base de données de référence, le résultat d'identification indiquant si un utilisateur a pu être identifié ou non et/ou, dans le cas où un utilisateur a pu être identifié, quel utilisateur a été identifié à partir de la base de données de référence, et à renvoyer le résultat d'identification au dispositif à capacité audio (20).

10. Système selon la revendication 9, dans lequel le dispositif à capacité audio (20) est conçu de manière à indiquer le résultat d'identification à l'utilisateur (10), notamment un affichage visuel et/ou une sortie audio, en particulier, dans le cas où un utilisateur a pu être identifié, sous la forme d'une formule d'accueil.

11. Système selon la revendication 8, 9 ou 10, conçu pour mettre en oeuvre un procédé selon l'une des revendications 1 à 8.

12. Plateforme de traitement de la parole (3) destinée à identifier et à authentifier un utilisateur (10) afin de permettre à l'utilisateur (10) d'accéder à une zone sécurisée dans un réseau IP, en particulier à des données et/ou des services confidentiels, la plateforme de traitement de la parole (3) étant conçue de manière à recevoir une empreinte vocale sous la forme d'une séquence de fragments audio provenant d'un dispositif à capacité audio (20), les fragments audio respectifs étant transmis avec une longueur de transmission audio prédéterminée dans un paquet IP respectif et, après réception des fragments audio respectifs, à exécuter séquentiellement, selon la séquence des fragments audio, pour chaque fragment audio reçu, les étapes suivantes : la comparaison du fragment audio respectif avec un ensemble d'empreintes vocales de référence potentiellement concordantes avec l'empreinte vocale reçue, stockées dans une base de données de référence, afin de trouver une empreinte vocale de référence concordante, le calcul d'une valeur de confiance pour chaque empreinte vocale de référence potentiellement concordante stockée par rapport au fragment audio respectif, le rejet de chaque empreinte vocale de référence potentiellement concordante stockée, dont la valeur de confiance est inférieure à une valeur de seuil donnée, de l'ensemble d'empreintes vocales de référence potentiellement concordantes, et la comparaison récursive du fragment audio qui suit respectivement dans la séquence, uniquement avec les empreintes vocales de référence potentiellement concordantes respectives dans la base de données de référence qui restent dans l'ensemble, jusqu'à ce qu'il ne reste qu'une seule empreinte vocale de référence en tant qu'empreinte vocale de référence potentiellement concordante dans l'ensemble.

13. Plateforme de traitement de la parole selon la revendication 12, qui utilise un algorithme basé sur l'apprentissage automatique pour comparer le fragment audio respectif avec des fragments audio correspondants des empreintes vocales de référence potentiellement concordantes comprises dans l'ensemble.

14. Produit de programme informatique destiné à identifier et à authentifier un utilisateur afin de permettre à l'utilisateur d'accéder à une zone sécurisée dans un réseau IP, en particulier à des données et/ou des services confidentiels, le produit de programme informatique comprenant un support de stockage avec un code de programme, le code de programme étant conçu pour exécuter un procédé selon l'une des revendications 1 à 7 lorsque le code de programme est mis en oeuvre et exécuté sur au moins un processeur.
